# EUROPEAN PATENT SPECIFICATION

(11) **EP 4 389 542 B1**
(45) Date of publication and mention of the grant of the patent: **06.05.2026**
(21) Application number: 21958050.3
(22) Date of filing: 27.09.2021
(51) Int. Cl.: B60S 5/06, B60L 53/80, F16B 5/02, F16B 37/04, F16B 39/02

(54) **QUICK LOCK-CHANGING ASSEMBLY AND LOCKING DEVICE USING SAME**
SCHNELLVERRIEGELUNGSWECHSELANORDNUNG UND VERRIEGELUNGSVORRICHTUNG DAMIT
ENSEMBLE DE CHANGEMENT RAPIDE DE VERROUILLAGE ET DISPOSITIF DE VERROUILLAGE L'UTILISANT

(43) Date of publication of application: 26.06.2024
(73) Proprietor: Contemporary Amperex Technology (Hong Kong) Limited, Central, Central And Western District (HK)
(72) Inventor: ZHANG, Wenhui, Ningde, Fujian 352100 (CN); YOU, Shubing, Ningde, Fujian 352100 (CN); YE, Qingfeng, Ningde, Fujian 352100 (CN); WU, Yuanhe, Ningde, Fujian 352100 (CN)
(74) Representative: Lorenz Seidler Gossel Part. mbB
(86) International application number: PCT/CN2021/121106
(87) International publication number: WO 2023/044932

(56) References cited:
- EP-A1- 3 466 734
- CN-A- 109 037 762
- CN-A- 109 515 148
- CN-A- 110 486 369
- US-A- 2 976 901
- US-A- 3 404 716
- US-A- 4 191 236
- US-A1- 2012 099 943
- US-A1- 2018 135 679
- US-A1- 2019 051 876

## Description

### Technical Field

The present application relates to the technical field of locking, and more particularly relates to a quick-change lock assembly for a battery and a locking device using the same.

### Background Art

In recent years, with the rapid development of new energy vehicles, the global sales of new energy vehicles have continued to grow. However, the charging time of the power battery of the new energy vehicle is long, and such problem is generally solved by adopting a method for quickly changing the power battery. According to such battery change mode, the purpose of supplementing electric energy of the new energy vehicle is achieved by directly changing the battery pack of the new energy vehicle, rapid electric energy supplement can be achieved, and meanwhile, battery maintenance and prolonging of the service life are facilitated.

However, a current locking device for locking the battery pack to the vehicle body requires a large amount of space. Therefore, it is desirable to provide a locking device, which requires less space, can achieve high fastening performance, and has an anti-loosening structure with high reliability.

In the prior art, elements of locking devices of the generic kind are disclosed in US 4,191,236 A, US 2,976,901 A, US 3,404,716 A, US 2018/135679 A1, EP 3 466 734 A1, US 2012/099943 A1 and CN 109 515 148 A.

### Summary of the Invention

The present application provides a locking device using a quick-change lock assembly.

In a first aspect, provided is a nut assembly, comprising: a quick-change nut comprising a nut body, a through threaded hole being formed in the nut body; a locking mechanism, a locking concave portion being provided on the side, opposite to the threaded hole, of the locking mechanism, and second anti-loosening teeth being formed on the inner surface of the locking concave portion; and an elastic member matched with the locking mechanism to make the locking mechanism approach the quick-change nut. According to the configuration of the nut assembly of the present application, the installation space needed by the locking device can be greatly reduced, and meanwhile, high fastening performance as well as anti-loosening and anti-rotation performance with high reliability can be achieved.

The nut assembly further comprises: a cover plate; and a base, the cover plate being fixedly connected to the base, and an accommodating space being formed between the cover plate and the base; wherein the quick-change nut further comprises a cap portion connected to the nut body, the cap portion is arranged in the accommodating space, an opening from which the nut body protrudes is formed in the base, and the accommodating space is configured to allow the quick-change nut to move within a predetermined range. By means of such configuration, when the axis of the quick-change bolt and the axis of the quick-change nut are not in a straight line, the quick-change bolt and the quick-change nut can be better aligned.

In some embodiments, a guide portion is formed on the side, opposite to the cover plate, of the locking mechanism, and a guide hole matched with the guide portion is formed in the cover plate, the elastic member sleeves the guide portion, and both ends of the elastic member respectively abut against the cover plate and the locking mechanism. By means of such configuration, movement of the locking mechanism can be guided, and the elastic member can be positioned.

In some embodiments, a flanging is provided on the base and/or the cover, and the flanging is configured to limit the rotation of the quick-change nut relative to the base and/or the cover plate. Through arrangement of the flanging, when the quick-change bolt and the quick-change nut are tightened, the quick-change nut can be prevented from rotating relative to the base and/or the cover plate.

Protrusions are formed on the cap portion, and snap grooves snapped with the protrusions are formed on the locking mechanism. By means of such configuration, the locking mechanism can be positioned to prevent the locking mechanism from rotating relative to the quick-change nut.

In a second aspect, provided is a locking device comprising: the nut assembly as described above, and a quick-change lock assembly.

The quick-change lock assembly comprises: a shell with a hollow cavity formed therein; a quick-change bolt arranged in the cavity, wherein the quick-change bolt comprises a guide section, a threaded fixing section, a flange portion and a tool matching section, a through hole is formed in the quick-change bolt along the axial direction, first anti-loosening teeth are formed on the guide section, and the first anti-loosening teeth can be locked to limit the rotation of the quick-change bolt; an unlocking mandrel configured to be inserted and retained in the through hole, wherein the length of the unlocking mandrel is greater than the length of the through hole, and when an external tool is inserted into the tool matching section, the external tool can push the unlocking mandrel to move along the through hole and protrude from the guide section to remove the locking of the first anti-loosening teeth; and a bolt fixing ring fixed to the shell and configured to stop the flange portion. According to the configuration of the quick-change lock assembly, the installation space needed by the locking device can be greatly reduced, and meanwhile, high fastening performance as well as anti-loosening and anti-rotation performance with high reliability can be achieved.

The quick-change bolt of the locking device is configured such that, when the quick-change bolt is tightened with the quick-change nut, the guide section passes through the threaded hole of the quick-change nut and abuts against the inner surface of the locking concave portion, and wherein the second anti-loosening teeth are adapted to be engaged with the first anti-loosening teeth for locking or disengaged from the same for unlocking. By using the quick-change lock assembly and the nut assembly of the present application, the installation space needed by the locking device can be greatly reduced, and meanwhile, high fastening performance as well as anti-loosening and anti-rotation performance with high reliability can be achieved.

In some embodiments, the first anti-loosening teeth and the second anti-loosening teeth are inclined toothed structures. The quick-change bolt can be better prevented from loosening by using the anti-loosening teeth with the inclined toothed structures.

In some embodiments, the angle of inclination of the first anti-loosening teeth and the second anti-loosening teeth is 30°-60°. By setting the angle of inclination of the anti-loosening teeth to be 30°-60°, the anti-loosening and anti-rotation effects can be optimally achieved.

In some embodiments, the guide section is frustum-shaped, and the first anti-loosening teeth are arranged on the conical surface of the guide section. By means of such configuration, installation of the quick-change bolt can be better guided.

In some embodiments, a boss is formed at the top of the shell, and the outer ring of the boss has a toothed structure. By means of interference fit of the toothed structure, the shell of the quick-change lock assembly is pressed into a battery pack beam, such that quick installation of the quick-change lock assembly and the battery pack beam can be achieved.

In some embodiments, a step portion is formed on the inner side of the bolt fixing ring, and the step portion stops the flange portion. By means of such configuration, it is possible to prevent the quick-change bolt from coming out of the shell.

In some embodiments, the unlocking mandrel is provided with a head portion and a thin neck portion, wherein a protruding portion is formed on the inner wall of the through hole, the head portion is configured to be matched with the protruding portion to retain the unlocking mandrel in the through hole, and the thin neck portion is configured to move freely through the protruding portion. By means of such configuration, the unlocking mandrel can slide within a predetermined range in the through hole without coming out of the through hole.

In a third aspect, provided is a vehicle, comprising: a battery pack beam with a hole formed therein; a vehicle body beam with a groove formed therein; and the locking device as described above, wherein the nut assembly is fixed into the groove of the vehicle body beam, the quick-change lock assembly is fixed into the hole of the battery pack beam. By means of such configuration, the installation space needed by the locking device can be further reduced.

According to the locking device of the present application, particularly the quick-change lock assembly, the problem about the installation space needed by a quick-change lock can be reduced, convenient assembly and replacement can be achieved, assembly alignment is simple, and assembly efficiency is high.

### Description of Drawings

The drawings described herein are intended to provide a further understanding of the present application, which constitute a part of the present application. In the drawings:
Fig. 1 is a schematic exploded diagram of a quick-change lock assembly in a locking device according to some embodiments of the present application;
Fig. 2 is a schematic exploded diagram of a nut assembly in a locking device according to some embodiments of the present application;
Fig. 3 is a sectional view of a locking device comprising a quick-change lock assembly and a nut assembly according to some embodiments of the present application;
Fig. 4 is a schematic diagram showing a state in which a quick-change lock assembly and a nut assembly of a locking device according to some embodiments of the present application are respectively installed on a battery pack beam and a vehicle body beam;
Fig. 5 is a sectional view of a state in which a quick-change lock assembly is installed on a nut assembly; and
Fig. 6 is a schematic diagram illustrating a state in which a battery pack beam is locked to a vehicle body beam using a locking device according to some embodiments of the present application.

### Detailed Description

In order to make the objects, technical solutions and advantages of embodiments of the present application clearer, the technical solutions in the embodiments of the present application will be clearly described below with reference to the drawings for the embodiments of the present application.

The battery mentioned in embodiments of the present application refers to a single physical module comprising a plurality of battery cells to provide higher voltage and capacity. For example, the battery mentioned in the present application may comprise a battery module, a battery pack, or the like.

The present application provides a locking device using a quick-change lock assembly, which requires less space, can achieve high fastening performance, and meanwhile has an anti-loosening structure with high reliability.

A locking device 300 of the present application comprises a quick-change lock assembly 100 and a nut assembly 200.

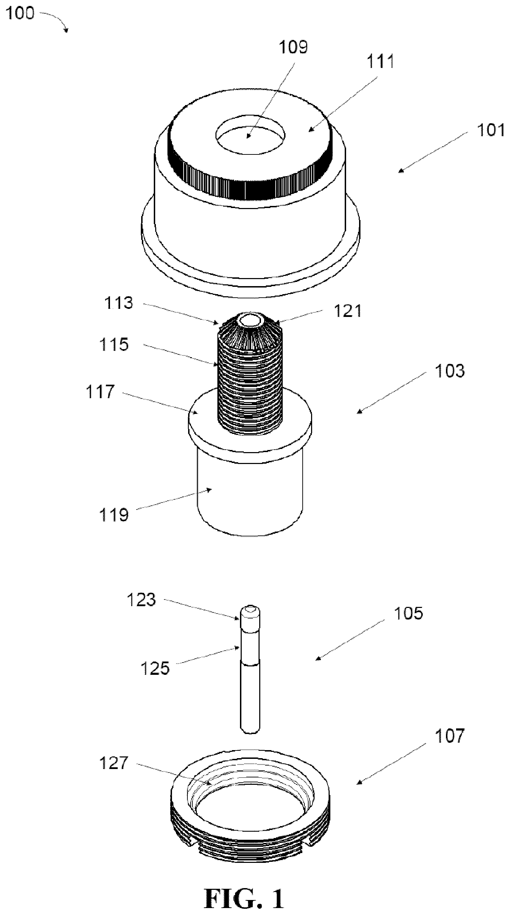

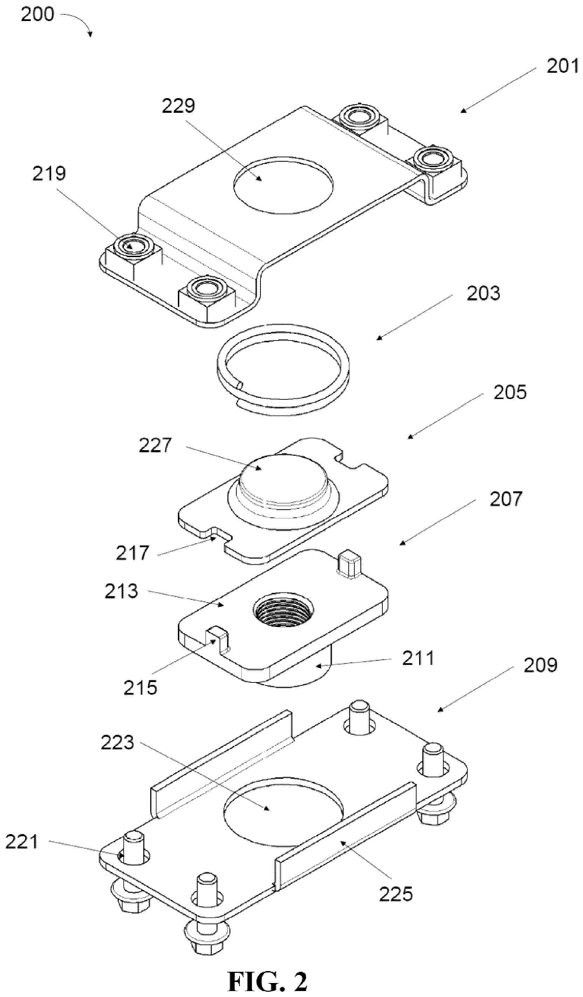

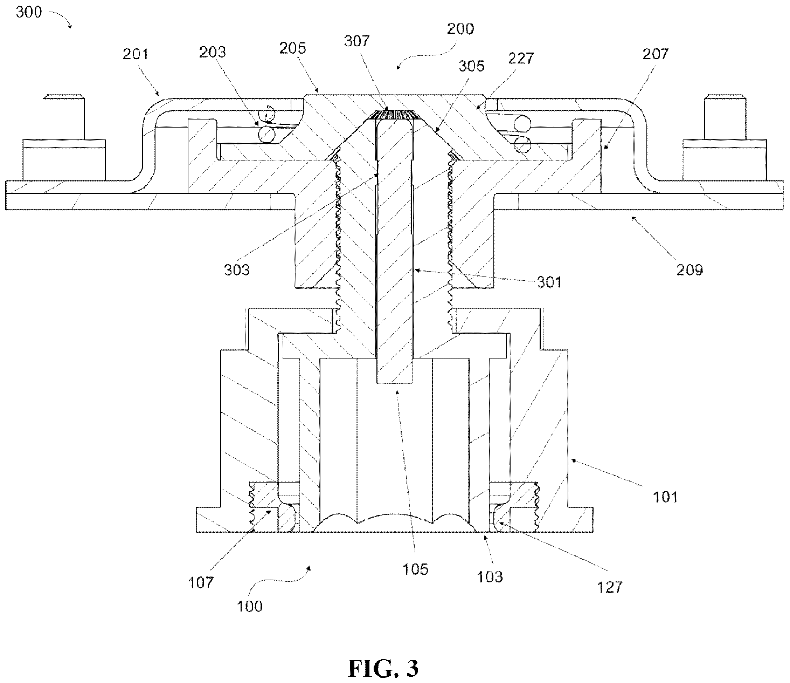

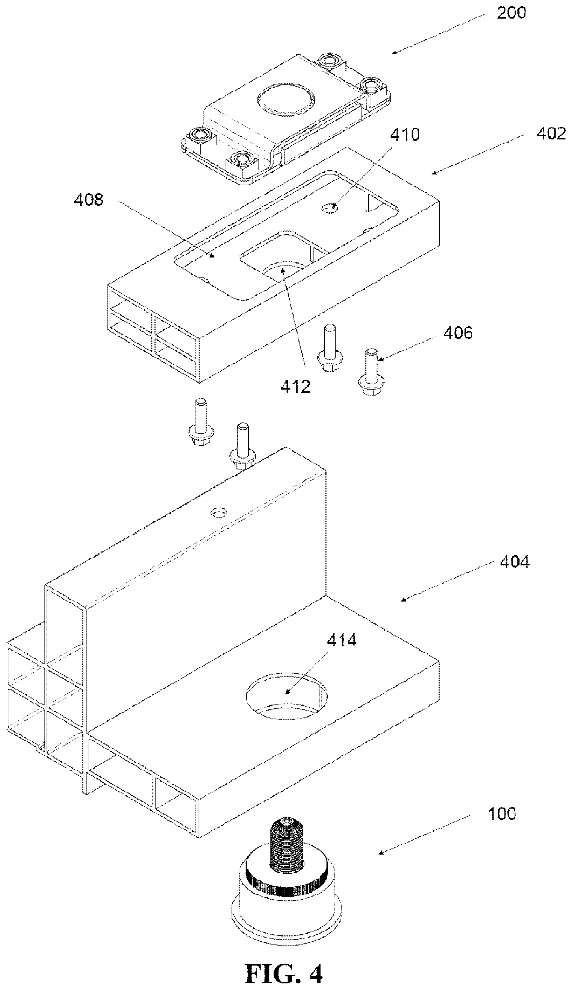

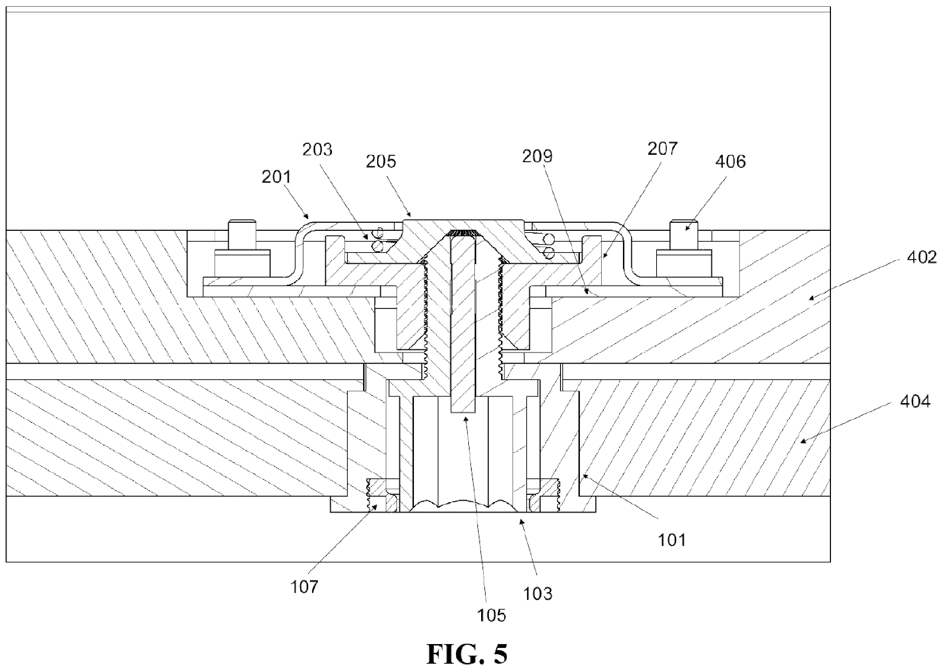

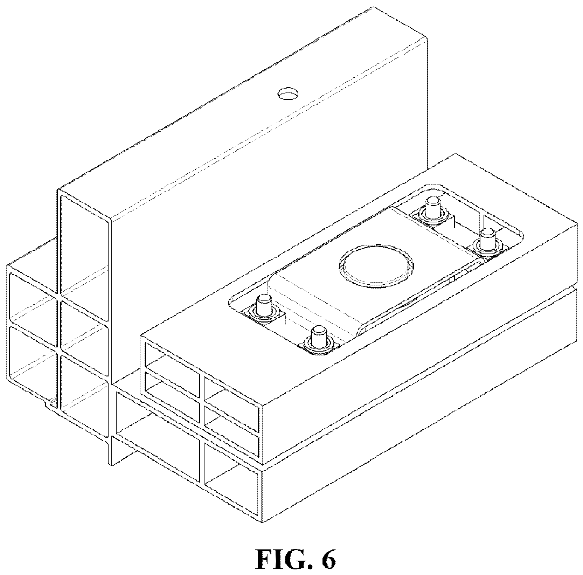

Fig. 1 is a schematic exploded diagram of a quick-change lock assembly in a locking device according to some embodiments of the present application. Fig. 2 is a schematic exploded diagram of a nut assembly in a locking device according to some embodiments of the present application. Fig. 3 is a sectional view of a locking device comprising a quick-change lock assembly and a nut assembly according to some embodiments of the present application. Fig. 4 is a schematic diagram showing a state in which a quick-change lock assembly and a nut assembly of a locking device according to some embodiments of the present application are respectively installed on a battery pack beam and a vehicle body beam. Fig. 5 is a sectional view of a state in which a quick-change lock assembly is installed on a nut assembly. Fig. 6 is a schematic diagram illustrating a state in which a battery pack beam is locked to a vehicle body beam using a locking device according to some embodiments of the present application.

First, the configuration of the quick-change lock assembly 100 of the locking device 300 of the present application will be described with reference to Fig. 1 and Fig. 3.

As shown in Fig. 1 and Fig. 3, the quick-change lock assembly 100 comprises a shell 101, a quick-change bolt 103, an unlocking mandrel 105 and a bolt fixing ring 107. The shell 101 has a substantially cylindrical structure with a hollow cavity formed therein and an opening 109 formed in the top wall. In some embodiments, a boss 111 is further formed at the top of the shell 101, and the outer ring of the boss 111 has a toothed structure for pressing the shell 101 into a battery pack beam 404 of a new energy vehicle by means of interference fit, as will be described later.

The quick-change bolt 103 is arranged in the cavity and is configured to be able to move axially to protrude from or be accommodated in the cavity via the opening 109. In other words, a clearance fit is formed between the quick-change bolt 103 and the shell 101.

The quick-change bolt 103 comprises a guide section 113, a threaded fixing section 115, a flange portion 117 and a tool matching section 119. The guide section 113 is located at the front end of the threaded fixing section 115. First anti-loosening teeth 121 are formed on the guide section 113. In some embodiments, the guide section 113 may be frustum-shaped. In this case, the first anti-loosening teeth 121 may be provided on the conical surface of the guide segment 113. A thread is provided on the threaded fixing section 115 for matching with the quick-change nut 207 to be described below, thereby realizing locking.

The tool matching section 119 is configured to be matched with a tool, and when a battery is locked or disassembled, the tool drives the tool matching section 119 to rotate, thereby realizing the tightening or disassembly of the quick-change bolt 103. Although not explicitly shown in the figures, as would be understood by those skilled in the art, for example, the tool matching section 119 may be internally provided with a polygonal through hole, and the front end of the tool may be a polygonal prism to match therewith, whereby the tool is able to drive the tool matching section 119 to rotate.

A through hole 301 is formed in the quick-change bolt 103 along the axial direction. Specifically, as shown in Fig. 3, the through hole 301 penetrates through the guide section 113, the threaded fixing section 115 and the flange portion 117 of the quick-change bolt 103. The unlocking mandrel 105 is configured to be inserted and retained in the through hole 301. In other words, the unlocking mandrel 105 can slide within a predetermined range along the through hole 301, and can be retained in the through hole 301 without coming out of the through hole 301.

In some embodiments, as shown in Fig. 1 and Fig. 3, the unlocking mandrel 105 is provided with a head portion 123 and a thin neck portion 125. Correspondingly, a protruding portion 303 is formed on the inner wall of the through hole 301. The head portion 123 of the unlocking mandrel 105 is configured to match with the protruding portion 303 to retain the unlocking mandrel 105 in the through hole 301. The thin neck portion 125 of the unlocking mandrel 105 is configured to move freely through the protruding portion 303. For example, there may be an interference fit between the head portion 123 of the unlocking mandrel 105 and the protruding portion 303, while there may be a clearance fit between the thin neck portion 125 of the unlocking mandrel 105 and the protruding portion 303. Therefore, after the head portion 123 of the unlocking mandrel 105 is inserted and passes through the protruding portion 303, the protruding portion 303 can snap the head portion 123 to prevent the unlocking mandrel 105 from coming out of the through hole 301. Meanwhile, the unlocking mandrel 105 is enabled to slide within a predetermined range in the through hole 301 since the thin neck portion 125 is free to move through the protruding portion 303.

The length of the unlocking mandrel 105 is set to be greater than the length of the through hole 301. That is, when the quick-change bolt 103 is to be assembled or disassembled, and the tool is inserted into the tool matching section 119 to prop against the bottom of the unlocking mandrel 105, the head portion 123 of the unlocking mandrel 105 will protrude from the front end of the quick-change bolt 103 by a predetermined length.

The bolt fixing ring 107 is fixed to the shell 101. In some embodiments, the bolt fixing ring 107 can be locked with the shell 101 via threaded connection. The bolt fixing ring 107 is configured to stop the flange portion 117 of the quick-change bolt 103 to prevent the quick-change bolt 103 from coming out of the shell 101 of the quick-change lock assembly 100. In some embodiments, a step portion 127 may be formed on the inner side of the bolt fixing ring 107, and the diameter of a space surrounded by the step portion 127 may be less than the diameter of a disk formed by the flange portion 117. Thus, before the quick-change bolt 103 is assembled or after the quick-change bolt 103 is disassembled, the step portion 127 can support the flange portion 117 such that the quick-change bolt 103 does not come out of the shell 101.

Next, the configuration of the nut assembly 200 of the locking device of the present application will be described with reference to Fig. 2 and Fig. 3.

The nut assembly 200 comprises a cover plate 201, an elastic member 203, a locking mechanism 205, a quick-change nut 207 and a base 209. The quick-change nut 207 is provided with a nut body 211 and a cap portion 213 connected to the nut body 211. The nut body 211 is provided with a through threaded hole which is matched with the quick-change bolt 103.

The locking mechanism 205 is arranged on the quick-change nut 207. A locking concave portion 305 is provided on the side, opposite to the threaded hole, of the locking mechanism 205, and second anti-loosening teeth 307 are formed on the inner surface of the locking concave portion 305. The second anti-loosening teeth 307 are adapted to be engaged with the first anti-loosening teeth 121 provided on the guide section 113 of the quick-change bolt 103 for locking or disengaged from the same for unlocking. In other words, the quick-change bolt 103 is configured such that, when tightened with the quick-change nut 207, the guide section 113 passes through the threaded hole of the quick-change nut 207 and abuts against the inner surface of the locking concave portion 305, thereby enabling the first anti-loosening teeth 121 to be engaged with the second anti-loosening teeth 307. In some embodiments, the first anti-loosening teeth 121 and the second anti-loosening teeth 307 are inclined toothed structures. In these embodiments, the angle of inclination of the first anti-loosening teeth 121 and the second anti-loosening teeth 307 is preferably 30°-60°.

Protrusions 215 are formed on the cap portion 213 of the quick-change nut 207. Correspondingly, a snap groove 217 is formed in the locking mechanism 205. The protrusions 215 are snapped with the snap grooves 217 to position the locking mechanism 205, for example, to prevent the locking mechanism 205 from rotating relative to the quick-change nut 207.

The elastic member 203 is arranged on the locking mechanism 205 to match with the locking mechanism 205 to make the locking mechanism 205 approach the quick-change nut 207. That is, the elastic member 203 exerts a force to push the locking mechanism 205 towards the quick-change nut 207. In some embodiments, the elastic member 203 may be a spring.

An accommodating space is formed between the cover plate 201 and the base 209. In some embodiments, the cover plate 201 may be formed as a substantially rectangular plate shape protruding in the middle, and the base 209 may be formed as a substantially rectangular plate shape. Thus, the accommodating space may be formed between the cover plate 201 and the base 209. In some embodiments, threaded holes 219 may be formed at four corners of the cover plate 201, and through holes 221 may be formed at the positions, corresponding to the threaded holes 219, of the base 209. Thus, the cover plate can be fixedly connected to a vehicle body beam 402 of the new energy vehicle, for example, by bolts 406 as shown in Fig. 4, as will be described later.

The cap portion 213 of the quick-change nut 207, the locking mechanism 205 and the elastic member 203 are all arranged in the accommodating space. The accommodating space is configured to allow the quick-change nut 207 to move within a predetermined range, thereby ensuring that the quick-change nut 207 is aligned with the quick-change lock assembly 100. The base 209 is provided with an opening 223 from which the nut body 211 protrudes. The diameter of the opening 223 is greater than the diameter of the outer ring of the nut body 211, thereby allowing the quick change nut 207 to move within the predetermined range as described above.

Both ends of the elastic member 203 respectively abut against the cover plate 201 and the locking mechanism 205. That is, when the cover plate 201 and the base 209 are locked by the bolt 406, the elastic member 203 is in a compressed state. Thus, the locking mechanism 205 is pushed in the direction away from the cover plate 201 to make the locking mechanism 205 approach the quick-change nut 207.

In some embodiments, a guide portion 227 is formed on the side, opposite to the cover plate 201, of the locking mechanism 205. Correspondingly, a guide hole 229 which is in guide fit with the guide portion 227 is formed in the cover plate 201. The guide portion 227 may protrude from the guide hole 229. Here again, the diameter of the guide hole 229 is greater than the diameter of the guide portion 227, thereby allowing the quick-change nut 207 to move within the predetermined range, as described above. In these embodiments, the elastic member 203 can be sleeved on the guide portion 227.

In some embodiments, a flanging 225 is provided on the base 209 to limit the rotation of the quick-change nut 207 relative to the base 209. Alternatively, in some other embodiments, the flanging 225 may also be provided on one side of the cover plate 201. Alternatively, flangings 225 may be provided on both the base 209 and the cover plate 201.

Next, with reference to Fig. 4, an embodiment of locking a battery pack to a vehicle body of the new energy vehicle by using the quick-change lock assembly 100 and the nut assembly 200 of the present application is illustrated.

As shown in Fig. 4, a substantially circular hole 414 corresponding to the shape of the shell 101 of the quick-change lock assembly 100 is formed in the battery pack beam 404 of the new energy vehicle. During installation, the boss 111 of the shell 101 is aligned with the circular hole 414, the shell 101 of the quick-change lock assembly 100 is pressed into the battery pack beam 404 through interference fit of the toothed structure for riveting and fixing, achieving quick installation of the quick-change lock assembly 100 and the battery pack beam 404.

On the other hand, a substantially rectangular groove 408 corresponding to the appearance of the nut assembly 200 is formed in the vehicle body beam 402 of the new energy vehicle. The nut assembly 200 is arranged in the groove 408 and supported by the groove 408. Through holes 410 are formed in the positions, corresponding to the threaded holes 219 of the nut assembly 200, of the groove 408. The bolts 406 are inserted into the through holes 410 and matched with the threaded holes 219 to fix the nut assembly 200 into the groove 408 of the vehicle body beam 402. An opening 412 is formed in the position, corresponding to the nut body 211 of the nut assembly 200, of the groove 408, and the nut body 211 passes through the opening 412 to match with the quick-change bolt 103 of the quick-change lock assembly 100 to achieve locking.

During installation, a tool is inserted into the tool matching section 119 of the quick-change bolt 103 to drive the quick-change bolt 103 to rotate, achieving the connection of the quick-change bolt 103 and the quick-change nut 207. Note that, at this time, as described above, since the tool props against the bottom of the unlocking mandrel 105, the head portion 123 of the unlocking mandrel 105 protrudes from the top of the through hole 301 of the quick-change bolt 103 by a predetermined length. As a result, when the quick-change bolt 103 is tightened to approach the end, the unlocking mandrel 105 will prop against the locking mechanism 205 until the quick-change bolt 103 and the quick-change nut 207 are fully tightened. Later, the tool is removed to release the force of the unlocking mandrel 105, and the locking mechanism 205 is reset by the elastic member 203. As previously described, the elastic member 203 pushes the locking mechanism 205 towards the quick-change bolt 103, such that the second anti-loosening teeth 307 of the locking mechanism 205 can be engaged with the first anti-loosening teeth 121 of the guide section 113 of the quick-change bolt 103, thereby preventing the quick-change bolt 103 from loosening. Fig. 5 illustrates the state in which the quick-change lock assembly is installed on the nut assembly. Conversely, when the quick-change bolt 103 is disassembled, the tool props against the bottom of the unlocking mandrel 105, such that the locking mechanism 205 is lifted, the second anti-loosening teeth 307 of the locking mechanism 205 are disengaged from the first anti-loosening teeth 121 of the guide section 113 of the quick-change bolt 103, and thus the quick-change bolt 103 can be disassembled.

Fig. 6 illustrates the schematic diagram showing the state in which the battery pack beam is locked to the vehicle body beam using the locking device. According to the locking device of the present application, particularly the one-piece quick-change lock assembly of the present application, quick assembly of the locking device can be achieved, and meanwhile, the anti-loosening and anti-rotation effects are achieved.

It should be understood that although the locking device is described above in connection with the power battery of the new energy vehicle, the locking device is not limited to being only applied to the power battery, but may also be applied to other locking scenarios.

Finally, it should be noted that the above embodiments are merely used for illustrating rather than limiting the technical solutions of the present application.

## Claims

1. A nut assembly (200), comprising:
a quick-change nut (207), comprising a nut body (211), a through threaded hole (219) being formed in the nut body (211);
a locking mechanism (205), a locking concave portion (305) being provided on the side, opposite to the threaded hole (219), of the locking mechanism (205), and second anti-loosening teeth (307) being formed on the inner surface of the locking concave portion (305);
an elastic member (203), matched with the locking mechanism (205) to make the locking mechanism (205) approach the quick-change nut (207);
a cover plate (201); and
a base (209), the cover plate (201) being fixedly connected to the base (209), and an accommodating space being formed between the cover plate (201) and the base (209);
wherein the accommodating space is configured to allow the quick-change nut (207) to move within a predetermined range; **characterized in that** the quick-change nut (207) further comprises a cap portion (213) connected to the nut body (211), the cap portion (213) is arranged in the accommodating space, an opening from which the nut body (211) protrudes is formed in the base (209), and **in that** protrusions (215) are formed on the cap portion (213), and snap grooves (217) snapped with the protrusions (215) are formed in the locking mechanism (205).

2. The nut assembly (200) according to claim 1, wherein,
a guide portion (227) is formed on the side, opposite to the cover plate (201), of the locking mechanism (205), and a guide hole (229) matched with the guide portion (227) is formed in the cover plate (201), the elastic member (203) sleeves the guide portion (227), and both ends of the elastic member (203) respectively abut against the cover plate (201) and the locking mechanism (205).

3. The nut assembly (200) according to claim 1 or 2, wherein,
a flanging (225) is provided on the base (209) and/or the cover plate (201), and the flanging (225) is configured to limit the rotation of the quick-change nut (207) relative to the base (209) and/or the cover plate (201).

4. A locking device (300), comprising:
the nut assembly (200) according to any one of claims 1-3; and
a quick-change lock assembly (100), comprising:
a shell (101) with a hollow cavity formed therein;
a quick-change bolt (103) arranged in the cavity, wherein the quick-change bolt (103) comprises a guide section (113), a threaded fixing section (115), a flange portion (117) and a tool matching section (119), a through hole (301) is formed in the quick-change bolt (103) along the axial direction, first anti-loosening teeth (121) are formed on the guide section (113), and the first anti-loosening teeth (121) are enabled to be locked to limit the rotation of the quick-change bolt (103);
an unlocking mandrel (105) configured to be inserted and retained in the through hole (301), wherein the length of the unlocking mandrel (105) is greater than the length of the through hole (301), and when an external tool is inserted into the tool matching section (119), the external tool is capable of pushing the unlocking mandrel (105) to move along the through hole (301) and protrude from the guide section (113) to remove the locking of the first anti-loosening teeth (121); and
a bolt fixing ring (107) fixed to the shell (101) and configured to stop the flange portion (117);
wherein the quick-change bolt (103) is configured such that, when the quick-change bolt (103) is tightened with the quick-change nut (207), the guide section (113) passes through the threaded hole (219) of the quick-change nut (207) and abuts against the inner surface of the locking concave portion (305), and
wherein the second anti-loosening teeth (307) are adapted to be engaged with the first anti-loosening teeth (121) for locking or disengaged from the same for unlocking.

5. The locking device (300) according to claim 4, wherein,
the first anti-loosening teeth (121) and the second anti-loosening teeth (307) are inclined toothed structures.

6. The locking device (300) according to claim 5, wherein,
the angle of inclination of the first anti-loosening teeth (121) and the second anti-loosening teeth (307) is 30°-60°.

7. The locking device (300) according to any one of claims 4-6, wherein,
the guide section (113) is frustum-shaped, and the first anti-loosening teeth (121) are arranged on the conical surface of the guide section (113).

8. The locking device (300) according to any one of claims 4-7, wherein,
a boss (111) is formed at the top of the shell (101), and the outer ring of the boss (111) has a toothed structure.

9. The locking device (300) according to any one of claims 4-8, wherein,
a step portion (127) is formed on the inner side of the bolt fixing ring (107), and the step portion (127) stops the flange portion (117).

10. The locking device (300) according to any one of claims 4-9, wherein,
the unlocking mandrel (105) is provided with a head portion (123) and a thin neck portion (125), wherein a protruding portion (303) is formed on the inner wall of the through hole (301), the head portion (123) is configured to be matched with the protruding portion (303) to retain the unlocking mandrel (105) in the through hole (301), and the thin neck portion (125) is configured to move freely through the protruding portion (303).

11. A vehicle, comprising:
a battery pack beam (404) with a hole formed therein;
a vehicle body beam (402) with a groove (408) formed therein; and
the locking device (300) according to any one of claims 1-10,
wherein the nut assembly (200) is fixed into the groove (408) of the vehicle body beam (402), and the quick-change lock assembly (100) is fixed into the hole of the battery pack beam (404).

## Patentansprüche

1. Mutternanordnung (200), umfassend:
eine Schnellwechselmutter (207), umfassend einen Mutterkörper (211), wobei in dem Mutterkörper (211) ein durchgehendes Gewindeloch (219) ausgebildet ist;
einen Verriegelungsmechanismus (205), wobei an der dem Gewindeloch (219) gegenüberliegenden Seite des Verriegelungsmechanismus (205) ein verriegelnder konkaver Abschnitt (305) vorgesehen ist und an der Innenfläche des verriegelnden konkaven Abschnitts (305) zweite Losdrehsicherungszähne (307) ausgebildet sind;
ein elastisches Element (203), das mit dem Verriegelungsmechanismus (205) zusammenwirkt, um den Verriegelungsmechanismus (205) an die Schnellwechselmutter (207) heranzuführen;
eine Abdeckplatte (201); und
eine Basis (209), wobei die Abdeckplatte (201) fest mit der Basis (209) verbunden ist und zwischen der Abdeckplatte (201) und der Basis (209) ein Aufnahmeraum ausgebildet ist;
wobei der Aufnahmeraum so ausgebildet ist, dass sich die Schnellwechselmutter (207) innerhalb eines vorbestimmten Bereichs bewegen kann;
**dadurch gekennzeichnet, dass**
die Schnellwechselmutter (207) ferner einen mit dem Mutterkörper (211) verbundenen Kappenabschnitt (213) umfasst, der Kappenabschnitt (213) in dem Aufnahmeraum angeordnet ist, in der Basis (209) eine Öffnung ausgebildet ist, aus der der Mutterkörper (211) hervorsteht, und
dass an dem Kappenabschnitt (213) Vorsprünge (215) ausgebildet sind und in dem Verriegelungsmechanismus (205) Rastnuten (217) ausgebildet sind, die mit den Vorsprüngen (215) verrastet sind.

2. Mutternanordnung (200) nach Anspruch 1, wobei
an der der Abdeckplatte (201) gegenüberliegenden Seite des Verriegelungsmechanismus (205) ein Führungsabschnitt (227) ausgebildet ist und in der Abdeckplatte (201) ein mit dem Führungsabschnitt (227) zusammenpassendes Führungsloch (229) ausgebildet ist, das elastische Element (203) den Führungsabschnitt (227) umhüllt und beide Enden des elastischen Elements (203) jeweils an der Abdeckplatte (201) und dem Verriegelungsmechanismus (205) anliegen.

3. Mutternanordnung (200) nach Anspruch 1 oder 2, wobei
an der Basis (209) und/oder der Abdeckplatte (201) ein Flanschrand (225) vorgesehen ist und der Flanschrand (225) dazu ausgebildet ist, die Drehung der Schnellwechselmutter (207) relativ zu der Basis (209) und/oder der Abdeckplatte (201) zu begrenzen.

4. Verriegelungsvorrichtung (300), umfassend:
die Mutternanordnung (200) nach einem der Ansprüche 1 bis 3; und eine Schnellwechsel-Verriegelungsanordnung (100), umfassend:
ein Gehäuse (101), in dem ein hohler Hohlraum ausgebildet ist;
einen in dem Hohlraum angeordneten Schnellwechselbolzen (103), wobei der Schnellwechselbolzen (103) einen Führungsabschnitt (113), einen Gewindebefestigungsabschnitt (115), einen Flanschabschnitt (117) und einen Werkzeuganpassungsabschnitt (119) umfasst, in dem Schnellwechselbolzen (103) entlang der Axialrichtung ein Durchgangsloch (301) ausgebildet ist, an dem Führungsabschnitt (113) erste Losdrehsicherungszähne (121) ausgebildet sind und die ersten Losdrehsicherungszähne (121) verriegelbar sind, um die Drehung des Schnellwechselbolzens (103) zu begrenzen;
einen Entriegelungsdorn (105), der dazu ausgebildet ist, in das Durchgangsloch (301) eingeführt und darin gehalten zu werden, wobei die Länge des Entriegelungsdorns (105) größer ist als die Länge des Durchgangslochs (301), und wenn ein externes Werkzeug in den Werkzeuganpassungsabschnitt (119) eingeführt wird, das externe Werkzeug in der Lage ist, den Entriegelungsdorn (105) entlang des Durchgangslochs (301) zu verschieben und aus dem Führungsabschnitt (113) hervortreten zu lassen, um die Verriegelung der ersten Losdrehsicherungszähne (121) aufzuheben; und
einen am Gehäuse (101) befestigten Bolzenbefestigungsring (107), der dazu ausgebildet ist, den Flanschabschnitt (117) anzuhalten;
wobei der Schnellwechselbolzen (103) so ausgebildet ist, dass, wenn der Schnellwechselbolzen (103) mit der Schnellwechselmutter (207) festgezogen wird, der Führungsabschnitt (113) durch das Gewindeloch (219) der Schnellwechselmutter (207) hindurchgeht und an der Innenfläche des verriegelnden konkaven Abschnitts (305) anliegt, und
wobei die zweiten Losdrehsicherungszähne (307) dazu ausgebildet sind, zum Verriegeln mit den ersten Losdrehsicherungszähnen (121) in Eingriff zu kommen oder zum Entriegeln von diesen außer Eingriff zu treten.

5. Verriegelungsvorrichtung (300) nach Anspruch 4, wobei
die ersten Losdrehsicherungszähne (121) und die zweiten Losdrehsicherungszähne (307) geneigte Zahnstrukturen sind.

6. Verriegelungsvorrichtung (300) nach Anspruch 5, wobei
der Neigungswinkel der ersten Losdrehsicherungszähne (121) und der zweiten Losdrehsicherungszähne (307) 30° bis 60° beträgt.

7. Verriegelungsvorrichtung (300) nach einem der Ansprüche 4 bis 6, wobei
der Führungsabschnitt (113) kegelstumpfförmig ist und die ersten Losdrehsicherungszähne (121) auf der konischen Oberfläche des Führungsabschnitts (113) angeordnet sind.

8. Verriegelungsvorrichtung (300) nach einem der Ansprüche 4 bis 7, wobei
an der Oberseite des Gehäuses (101) ein Vorsprung (111) ausgebildet ist und der Außenring des Vorsprungs (111) eine Zahnstruktur aufweist.

9. Verriegelungsvorrichtung (300) nach einem der Ansprüche 4 bis 8, wobei
an der Innenseite des Bolzenbefestigungsrings (107) ein Stufenabschnitt (127) ausgebildet ist und der Stufenabschnitt (127) den Flanschabschnitt (117) anhält.

10. Verriegelungsvorrichtung (300) nach einem der Ansprüche 4 bis 9, wobei
der Entriegelungsdorn (105) mit einem Kopfabschnitt (123) und einem dünnen Halsabschnitt (125) versehen ist, wobei an der Innenwand des Durchgangslochs (301) ein Vorsprungsabschnitt (303) ausgebildet ist, der Kopfabschnitt (123) dazu ausgebildet ist, mit dem Vorsprungsabschnitt (303) zusammenzuwirken, um den Entriegelungsdorn (105) in dem Durchgangsloch (301) zu halten, und der dünne Halsabschnitt (125) dazu ausgebildet ist, sich frei durch den Vorsprungsabschnitt (303) hindurchzubewegen.

11. Fahrzeug, umfassend:
einen Batteriepack-Trägerbalken (404), in dem ein Loch ausgebildet ist;
einen Fahrzeugkarosserie-Trägerbalken (402), in dem eine Nut (408) ausgebildet ist; und die Verriegelungsvorrichtung (300) nach einem der Ansprüche 1 bis 10,
wobei die Mutternanordnung (200) in der Nut (408) des Fahrzeugkarosserie-Trägerbalkens (402) befestigt ist,
und die Schnellwechsel-Verriegelungsanordnung (100) in dem Loch des Batteriepack-Trägerbalkens (404) befestigt ist.

## Revendications

1. Ensemble d'écrou (200), comprenant :
un écrou à changement rapide (207), comprenant un corps d'écrou (211), un trou fileté traversant (219) étant formé dans le corps d'écrou (211) ;
un mécanisme de verrouillage (205), une partie concave de verrouillage (305) étant prévue sur le côté, opposé au trou fileté (219), du mécanisme de verrouillage (205), et des deuxièmes dents anti-desserrage (307) étant formées sur la surface intérieure de la partie concave de verrouillage (305) ;
un élément élastique (203), agencé avec le mécanisme de verrouillage (205) pour amener le mécanisme de verrouillage (205) à s'approcher de l'écrou à changement rapide (207) ;
une plaque de recouvrement (201) ; et
une base (209), la plaque de recouvrement (201) étant fixement reliée à la base (209), et un espace de logement étant formé entre la plaque de recouvrement (201) et la base (209) ;
dans lequel l'espace de logement est configuré pour permettre à l'écrou à changement rapide (207) de se déplacer dans une plage prédéterminée ;
**caractérisé en ce que** l'écrou à changement rapide (207) comprend en outre une partie de capuchon (213) reliée au corps d'écrou (211), la partie de capuchon (213) étant disposée dans l'espace de logement, une ouverture à partir de laquelle le corps d'écrou (211) fait saillie étant formée dans la base (209), et
**en ce que** des saillies (215) sont formées sur la partie de capuchon (213), et des rainures d'encliquetage (217) encliquetées avec les saillies (215) sont formées dans le mécanisme de verrouillage (205).

2. Ensemble d'écrou (200) selon la revendication 1, dans lequel,
une partie de guidage (227) est formée sur le côté, opposé à la plaque de recouvrement (201), du mécanisme de verrouillage (205), et un trou de guidage (229) agencé avec la partie de guidage (227) est formé dans la plaque de recouvrement (201), l'élément élastique (203) entoure la partie de guidage (227), et les deux extrémités de l'élément élastique (203) viennent respectivement en appui contre la plaque de recouvrement (201) et le mécanisme de verrouillage (205).

3. Ensemble d'écrou (200) selon la revendication 1 ou 2, dans lequel,
un rebord (225) est prévu sur la base (209) et/ou la plaque de recouvrement (201), et le rebord (225) est configuré pour limiter la rotation de l'écrou à changement rapide (207) par rapport à la base (209) et/ou à la plaque de recouvrement (201).

4. Dispositif de verrouillage (300), comprenant :
l'ensemble d'écrou (200) selon l'une quelconque des revendications 1 à 3 ; et un ensemble de verrouillage à changement rapide (100), comprenant :
une coque (101) dans laquelle est formée une cavité creuse ;
un boulon à changement rapide (103) disposé dans la cavité, dans lequel le boulon à changement rapide (103) comprend une section de guidage (113), une section de fixation filetée (115), une partie de bride (117) et une section d'adaptation d'outil (119), un trou traversant (301) est formé dans le boulon à changement rapide (103) selon la direction axiale, des premières dents anti-desserrage (121) sont formées sur la section de guidage (113), et les premières dents anti-desserrage (121) peuvent être verrouillées pour limiter la rotation du boulon à changement rapide (103) ;
un mandrin de déverrouillage (105) configuré pour être inséré et retenu dans le trou traversant (301), dans lequel la longueur du mandrin de déverrouillage (105) est supérieure à la longueur du trou traversant (301), et lorsqu'un outil externe est inséré dans la section d'adaptation d'outil (119), l'outil externe est capable de pousser le mandrin de déverrouillage (105) à se déplacer le long du trou traversant (301) et à faire saillie hors de la section de guidage (113) pour supprimer le verrouillage des premières dents anti-desserrage (121) ; et
une bague de fixation du boulon (107) fixée à la coque (101) et configurée pour arrêter la partie de bride (117) ;
dans lequel le boulon à changement rapide (103) est configuré de telle sorte que, lorsque le boulon à changement rapide (103) est serré avec l'écrou à changement rapide (207), la section de guidage (113) passe à travers le trou fileté (219) de l'écrou à changement rapide (207) et vient en appui contre la surface intérieure de la partie concave de verrouillage (305), et
dans lequel les deuxièmes dents anti-desserrage (307) sont adaptées pour être engagées avec les premières dents anti-desserrage (121) pour le verrouillage ou désengagées de celles-ci pour le déverrouillage.

5. Dispositif de verrouillage (300) selon la revendication 4, dans lequel,
les premières dents anti-desserrage (121) et les deuxièmes dents anti-desserrage (307) sont des structures dentées inclinées.

6. Dispositif de verrouillage (300) selon la revendication 5, dans lequel,
l'angle d'inclinaison des premières dents anti-desserrage (121) et des deuxièmes dents anti-desserrage (307) est de 30° à 60°.

7. Dispositif de verrouillage (300) selon l'une quelconque des revendications 4 à 6, dans lequel,
la section de guidage (113) est en forme de tronc de cône, et les premières dents anti-desserrage (121) sont disposées sur la surface conique de la section de guidage (113).

8. Dispositif de verrouillage (300) selon l'une quelconque des revendications 4 à 7, dans lequel,
un bossage (111) est formé au sommet de la coque (101), et l'anneau extérieur du bossage (111) présente une structure dentée.

9. Dispositif de verrouillage (300) selon l'une quelconque des revendications 4 à 8, dans lequel,
une partie en gradin (127) est formée sur le côté intérieur de la bague de fixation du boulon (107), et la partie en gradin (127) arrête la partie de bride (117).

10. Dispositif de verrouillage (300) selon l'une quelconque des revendications 4 à 9, dans lequel,
le mandrin de déverrouillage (105) est pourvu d'une partie de tête (123) et d'une partie de col mince (125), dans lequel une partie saillante (303) est formée sur la paroi intérieure du trou traversant (301), la partie de tête (123) étant configurée pour être agencée avec la partie saillante (303) afin de retenir le mandrin de déverrouillage (105) dans le trou traversant (301), et la partie de col mince (125) étant configurée pour se déplacer librement à travers la partie saillante (303).

11. Véhicule, comprenant :
une poutre de pack de batterie (404) dans laquelle un trou est formé ;
une poutre de carrosserie de véhicule (402) dans laquelle une rainure (408) est formée ; et le dispositif de verrouillage (300) selon l'une quelconque des revendications 1 à 10,
dans lequel l'ensemble d'écrou (200) est fixé dans la rainure (408) de la poutre de carrosserie de véhicule (402),
et l'ensemble de verrouillage à changement rapide (100) est fixé dans le trou de la poutre de pack de batterie (404).
